# FASCICULE DE BREVET EUROPEEN

(11) **EP 4 170 445 B1**
(45) Date de publication et mention de la délivrance du brevet: **15.07.2026**
(21) Numéro de dépôt: 22201655.2
(22) Date de dépôt: 14.10.2022
(51) Int. Cl.: G05B 19/41

(54) **PROCÉDÉ DE CONTRÔLE DE L'USINAGE DE PIÈCES**
VERFAHREN ZUR STEUERUNG DER BEARBEITUNG VON WERKSTÜCKEN
METHOD FOR CONTROLLING THE MACHINING OF WORKPIECES

(30) Priorité: 21.10.2021 FR 2111173
(43) Date de publication de la demande: 26.04.2023
(73) Titulaire: Renault s.a.s, 92100 Boulogne Billancourt (FR)
(72) Inventeur: CARVALHO, HUGO, 1300 Borda do Campo Sao Jose dos Pinhais (BR); OLIVEIRA, Renato, 1300 Borda do Campo Sao Jose dos Pinhais (BR); SCHMIDT, Marco, 1300 Borda do Campo Sao Jose dos Pinhais (BR); SILVA, Antonio, 1300 Borda do Campo Sao Jose dos Pinhais (BR); SILVA, Luis-Gustavo, 1300 Borda do Campo Sao Jose dos Pinhais (BR); SOARES, Leonardo, 1300 Borda do Campo Sao Jose dos Pinhais (BR)

(56) Documents cités:
- EP-A1- 3 242 179
- EP-A2- 0 478 290
- EP-B1- 1 894 068
- DE-A1- 102015 012 795

## Description

La présente invention concerne un procédé de contrôle de l'usinage de pièces sur une chaine de production, permettant d'identifier et de corriger des erreurs de dimensionnement desdites pièces lors du fonctionnement de la chaine de production.

Les chaines de production peuvent comprendre une pluralité de machines d'usinage assurant la fabrication de plusieurs pièces. Lors de la fabrication des pièces, des tolérances de fabrication sont appliquées afin que les pièces présentent un dimensionnement variable autour d'une valeur nominale, contenu entre une valeur minimum et valeur maximum, en remplissant néanmoins la fonction qui leur est attribuée. Ainsi, des vérifications des dimensions des pièces sont couramment appliquées sur la chaine de production, permettant d'appliquer des correctifs sur les machines d'usinage qui usinent des pièces dont les dimensions sont jugées défectueuses. Afin de déterminer et d'appliquer ces correctifs, il est connu qu'un conducteur de la chaine de production mesure une des pièces sur la chaine de production de manière aléatoire, puis compare les valeurs mesurées à des valeurs nominales de ladite pièce et applique les correctifs manuellement sur la machine d'usinage lorsque les valeurs mesurées s'éloignent des valeurs nominales. Il est également connu d'utiliser une machine de mesure qui mesure automatiquement l'une des pièces sur la chaine de production, puis détermine les correctifs à appliquer à la machine d'usinage, correctifs qui sont ensuite intégrés manuellement par l'opérateur à la machine d'usinage. Le document EP 1 894 068 B1 décrit un procédé de contrôle connu de l'usinage d'une pièce usinée par une machine d'usinage, le procédé mettant en œuvre une machine de mesure et de contrôle d'une pièce. Les documents DE 10 2015 012795 A1, EP 3 242 179 A1 et EP 0 478 290 A2 illustrent également chacun un procédé connu de contrôle de l'usinage d'une pièce usinée.

Un des problèmes d'un tel procédé de contrôle de l'usinage des pièces réside en ce que, d'une part, l'intervention du conducteur dans le procédé peut amener à des erreurs humaines dans la détermination ou l'application des correctifs, et d'autre part, en ce qu'il nécessite un temps important de mise en œuvre. Par ailleurs, dans le cas où la chaine de production comprend au moins deux machines d'usinage configurées pour usiner la même pièce, c'est-à-dire une pièce présentant les mêmes dimensions, des erreurs dans l'application des correctifs à la bonne machine d'usinage ou des erreurs dans le calcul et/ou la saisie des correctifs par le conducteur, peuvent interférer dans l'efficacité de production de la chaine de production.

L'invention vise à remédier aux problèmes mentionnés ci-dessus en proposant un procédé de contrôle de l'usinage de pièces assurant d'une part une détermination fiable d'au moins un correctif à apporter aux pièces usinées sur la chaine de production et d'autre part en assurant l'application dudit correctif à la bonne machine d'usinage de la chaine de production, c'est-à-dire à la machine d'usinage dont la pièce mesurée nécessite des correctifs. L'invention porte donc sur un procédé de contrôle de l'usinage d'au moins une première pièce usinée par une première machine d'usinage et d'une deuxième pièce usinée par une deuxième machine d'usinage, conformément aux caractéristiques de la revendication 1.

On tire alors avantage du procédé en ce qu'il permet de déterminer le besoin d'au moins un correctif à apporter sur au moins l'une de la première machine d'usinage et/ou de la deuxième machine d'usinage, de manière automatisée et sécurisée, au moyen de la machine de mesure et/ou de contrôle, lors du fonctionnement de la chaine de production.

Par ailleurs, le procédé de contrôle s'assure de la bonne réception du correctif par la bonne machine d'usinage dont les prochaines pièces usinées nécessitent le correctif, c'est-à-dire la machine d'usinage d'où provient la première pièce ou la deuxième pièce aillant fait l'objet de la mesure lors de la deuxième étape. On assure ainsi de manière simple et fiable le bon fonctionnement de la chaine de production sans nécessiter l'intervention humaine, ce qui réduit le temps de réaction et réduit également le risque d'erreur.

Selon une caractéristique de l'invention, lors de la deuxième étape, la machine de mesure et/ou de contrôle compare au moins une valeur mesurée avec au moins une valeur nominale de la pièce, puis met en œuvre la troisième étape lorsque la différence entre l'au moins une valeur mesurée et l'au moins une valeur nominale passe au-dessus d'un seuil déterminé.

On comprend que la valeur nominale correspond à une valeur standard, attendue de la pièce. Par ailleurs, la première pièce et la deuxième pièce présentent une tolérance de fabrication, c'est-à-dire un intervalle dimensionnel autour de la valeur nominale dans lequel les dimensions de ladite pièce sont considérées comme acceptables. Ainsi, on comprend que le seuil correspond à une valeur où il est établi que les dimensions de la pièce se rapprochent des limites maximale et minimale de la tolérance de fabrication. Ainsi, lorsque la différence entre la valeur mesurée et la valeur nominale d'une dimension concernée dépasse le seuil déterminé, la machine de mesure et/ou de contrôle met en œuvre la troisième étape du procédé afin de déterminer le ou les correctifs à apporter pour que les prochaines pièces usinées par la machine d'usinage mise en œuvre lors de la première étape, s'éloignent des limites maximale ou minimale de la tolérance de fabrication, et se rapprochent de la valeur nominale. On comprend donc que le procédé de contrôle permet d'anticiper et d'éviter le dépassement dimensionnel des pièces usinées, en dehors de la tolérance de fabrication.

Selon une alternative de l'invention, lors de la deuxième étape, la machine de mesure et/ou de contrôle compare au moins une valeur mesurée avec au moins une valeur nominale de la pièce, la machine de mesure et/ou de contrôle arrêtant l'au moins une machine d'usinage ayant usinée la pièce mesurée à la deuxième étape lorsque l'au moins une valeur mesurée lors de la deuxième étape est en dehors d'une tolérance de fabrication de la valeur nominale correspondante.

Lorsque l'au moins une valeur mesurée est en dehors de la tolérance de fabrication, il est nécessaire d'arrêter la machine d'usinage d'où provient ladite pièce usinée afin de permettre l'intervention d'un conducteur de la chaine de production et d'arrêter la production de pièces défectueuses.

Selon une caractéristique de l'invention, la première pièce et la deuxième pièce usinées respectivement par la première machine d'usinage et la deuxième machine d'usinage présentent des dimensions de valeur nominale identique.

Selon un exemple de l'invention, la première pièce et la deuxième pièce sont des pièces identiques, destinées au même usinage. Le procédé est alors avantageux car il permet d'envoyer le correctif à la machine à l'origine de dérive dimensionnelle, et de vérifier que c'est bien cette machine qui a reçu le correctif.

Selon une caractéristique de l'invention, au cours de la deuxième étape, le machine de mesure et/ou de contrôle identifie également l'au moins une pièce usinée lors de la première étape par la machine d'usinage.

Selon une caractéristique de l'invention, la quatrième étape comprend une sous-étape de vérification de la bonne prise en charge du correctif reçu par la machine d'usinage lors de la troisième étape.

Lors de la quatrième étape, la machine d'usinage acquitte l'intégration du correctif reçu lors de la troisième étape, par exemple par l'envoi en retour d'un signal électronique à la machine de mesure et/ou de contrôle. Après avoir vérifié la bonne réception du correctif auprès de la bonne machine, le procédé vérifie que le correctif a bien été implémenté dans le programme de la machine d'usinage.

Selon un autre exemple de l'invention, la vérification de la prise en charge des correctifs par la machine d'usinage s'effectue par la mesure d'une pièce usinée issue de la machine d'usinage qui a reçu le correctif, les nouvelles mesures prises par la machine de mesure et/ou de contrôle devant être cohérentes avec le correctif envoyé. On comprend donc qu'à la suite de la quatrième étape, la machine d'usinage effectue à nouveau la première étape, en appliquant le correctif reçu lors de la troisième étape.

Selon une caractéristique de l'invention, lors de la première étape, la première machine d'usinage usine la première pièce et la deuxième machine d'usinage usine la deuxième pièce, lors de la deuxième étape, la machine de mesure et/ou de contrôle mesure la première pièce et la deuxième pièce et associe l'une ou l'autre des machines d'usinage aux pièces mesurées, et lors de la troisième étape, la machine de mesure et/ou de contrôle détermine des correctifs d'usinage à partir des mesures de la première pièce et de la deuxième pièce et transmet ces correctifs respectivement à la première machine d'usinage et la deuxième machine d'usinage mise en œuvre lors de la première étape.

On comprend qu'on tire avantage du procédé en ce qu'il permet à la machine de mesure et/ou de contrôle de vérifier au moins deux pièces usinées sur la chaine de production et notamment de déterminer et d'envoyer des correctifs à deux machines d'usinage distinctes mais fabriquant des pièces identiques, tout en vérifiant la réception des bons correctifs à la bonne machine d'usinage.

Selon une caractéristique de l'invention, au cours de la quatrième étape la machine de mesure et/ou de contrôle vérifie la bonne réception du correctif de la première pièce usinée et du correctif de la deuxième pièce usinée respectivement par la première machine d'usinage et la deuxième machine d'usinage.

L'invention porte également sur une chaine de production comprenant une première machine d'usinage et une deuxième machine d'usinage, la première machine d'usinage étant destinée à usiner une première pièce et la deuxième machine d'usinage étant destinée à usiner une deuxième pièce, la chaine de production comprenant une machine de mesure et/ou de contrôle, la chaine de production mettant en œuvre le procédé de contrôle de l'usinage selon l'une quelconque des caractéristiques précédentes.

Selon une caractéristique de la chaine de production, la première pièce et la deuxième pièce présentent des dimensions de valeur nominale identique.

L'invention porte par ailleurs sur un programme d'ordinateur comprenant des instructions de codes de programme pour l'exécution de la deuxième étape du procédé jusqu'à la quatrième étape du procédé selon les caractéristiques précédentes lorsque le programme est exécuté sur la machine de mesure et/ou de contrôle, selon lequel, sur la base d'informations recueillies sur la chaine de production selon les caractéristiques précédentes, le programme d'ordinateur est configuré pour associer l'une et/ou l'autre des machines d'usinage à la pièce mesurée à la deuxième étape, le programme d'ordinateur étant configuré pour vérifier la bonne réception du ou des correctifs envoyés à ladite machine d'usinage.

D'autres caractéristiques, détails et avantages de l'invention ressortiront plus clairement à la lecture de la description donnée ci-après à titre indicatif en relation avec des dessins dans lesquels :
[Fig 1] est une vue schématique d'une chaine de production mise en œuvre par le procédé selon l'invention ;
[Fig 2] est une vue schématique d'une pièce usinée issue de la première machine d'usinage ou de la deuxième machine d'usinage ;
[Fig 3] est un logigramme des étapes du procédé de contrôle de l'usinage de pièces sur la chaine de production.

Il faut tout d'abord noter que si les figures exposent l'invention de manière détaillée pour sa mise en œuvre, ces figures peuvent bien entendu servir à mieux définir l'invention, le cas échéant. Il est également à noter que ces figures n'exposent que des exemples de réalisation de l'invention. Enfin, les mêmes repères désignent les mêmes éléments dans l'ensemble des figures.

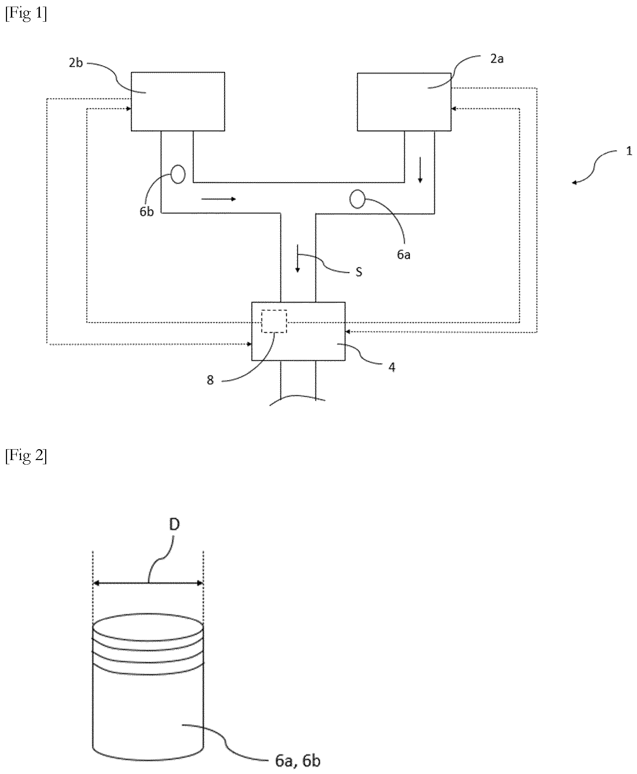

La figure 1 illustre une chaine de production 1 selon l'invention, comprenant une première machine d'usinage 2a, une deuxième machine d'usinage 2b et une machine de mesure et/ou de contrôle 4 des pièces usinées par ces machines. Plus particulièrement, la première machine d'usinage 2a assure l'usinage d'une première pièce 6a et la deuxième machine d'usinage 2b assure l'usinage d'une deuxième pièce 6b. Ces machines d'usinage 2a, 2b sont par exemple des machines numériques ou des centres d'usinage numériques connectés, de sorte à émettre ou recevoir des informations par voie électronique.

Selon une caractéristique de l'invention, la première pièce 6a et la deuxième pièce 6b présentent des dimensions identiques l'une de l'autre. En d'autres termes, la première machine d'usinage 2a et la deuxième machine d'usinage 2b sont configurées pour usiner des pièces 6a, 6b identiques d'un point de vue structurel et dimensionnel. Dans l'exemple de l'invention de la figure 2, la première pièce 6a et la deuxième pièce 6b sont des pistons, étant entendu que cet exemple n'est pas limitatif de l'invention et que ce piston n'est utilisé que pour illustrer le déroulement du procédé selon l'invention.

Tel que cela est visible sur la figure 1, la machine de mesure et/ou de contrôle 4 est disposée en sortie de la chaine de production 1 suivant un sens d'avancement S de l'usinage des pièces 6a, 6b représenté par des flèches sur la figure 1. En d'autres termes, la machine de mesure et/ou de contrôle 4 est disposée en aval de la première machine d'usinage 2a et de la deuxième machine d'usinage 2b et est apte à mesurer et/ou contrôler la première pièce 6a et/ou la deuxième pièce 6b en sortie de leur machine d'usinage 2a, 2b respective. De manière plus précise, la machine de mesure et/ou de contrôle 4 a pour fonction de s'assurer qu'au moins une des pièces 6a, 6b usinées sur la chaine de production 1 ne dépasse pas une tolérance de fabrication et permet notamment de détecter lorsque ladite pièce 6a, 6b s'approche des limites maximale et minimale de la tolérance de fabrication. Selon un exemple, la machine de mesure et/ou de contrôle 4 est un centre de mesure laser, ou un centre utilisant un palpeur apte à relever une dimension.

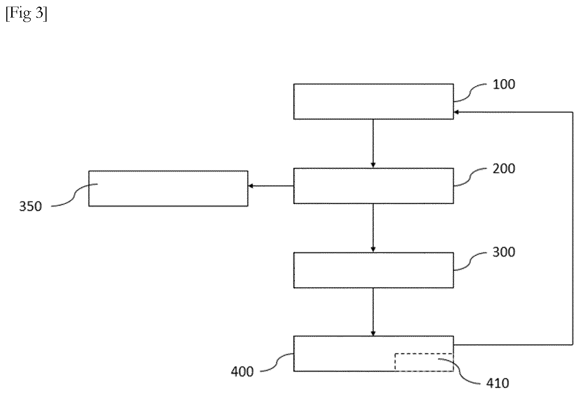

Ainsi, selon l'invention, la chaine de production 1 met en œuvre un procédé de contrôle de l'usinage d'au moins la première pièce 6a usinée par la première machine d'usinage 2a et/ou la deuxième pièce 6b usinée par la deuxième machine d'usinage 2b, le procédé mettant en œuvre au moins la machine de mesure et/ou de contrôle 4. Le procédé de contrôle va maintenant être décrit en rapport avec les figures 1 à 3 de la demande.

Il convient de considérer que le procédé qui va suivre est mis en œuvre dans une situation où la première machine d'usinage 2a et/ou la deuxième machine d'usinage 2b nécessitent au moins un correctif lors du fonctionnement de la chaine de production 1. Dans le cas où les pièces usinées par la première machine d'usinage 2a et/ou la deuxième machine d'usinage 2b présentent des dimensions conformes aux valeurs nominales de la pièce, le procédé de contrôle de l'usinage tel qu'il va être décrit n'est pas mis en œuvre, et notamment une troisième étape et une quatrième ne sont pas mises en œuvre.

Le procédé comprend au moins une première étape 100 au cours de laquelle au moins une des machines d'usinage 2a, 2b usine l'une des pièces 6a, 6b. Dans l'exemple de l'invention illustré, lors de la première étape 100, la première machine d'usinage 2a usine la première pièce 6a et la deuxième machine d'usinage 2b usine la deuxième pièce 6b. Chacune des pièces 6a, 6b usinées est alors acheminée sur la chaine de production 1 vers la machine de mesure et/ou de contrôle 4. Selon un exemple de l'invention, la première pièce 6a usinée peut être un premier piston, et la deuxième pièce 6b usinée peut être un deuxième piston. On comprend ici que la première machine d'usinage 2a et la deuxième machine d'usinage 2b usinent des pièces identiques d'un point de vue structurel et dimensionnel.

Il convient de considérer que chacune de la première machine d'usinage et/ou de la deuxième machine d'usinage peut usiner au moins deux pièces différentes d'un point de vue structurel et dimensionnel et que le procédé selon l'invention peut s'appliquer à au moins une des pièces produites par au moins une des machines d'usinage.

A une deuxième étape 200, la machine de mesure et/ou de contrôle 4 mesure l'au moins une pièce 6a, 6b usinée lors de la première étape 100 et associe l'une ou l'autre des machines d'usinage 2a, 2b à la pièce 6a, 6b ainsi mesurée. A cette fin, la machine de mesure et/ou de contrôle 4 comprend un programme d'ordinateur 8 comprenant des instructions de codes de programme permettant l'exécution de la deuxième étape 200 du procédé jusqu'à la quatrième étape 400, la troisième étape 300 et la quatrième étape 400 étant décrites plus loin dans la description détaillée de l'invention. Ainsi, lorsque le programme d'ordinateur 8 est exécuté sur ou par la machine de mesure et/ou de contrôle 4, celui-ci permet à ladite machine de mesure et/ou de contrôle 4 d'associer au moins l'une des machines d'usinage 2a, 2b à la pièce 6a, 6b mesurée et usinée lors de la première étape 100 sur la base d'informations recueillies sur la chaine de production 1.

L'identification de la machine d'usinage 2a, 2b à l'origine de la pièce 6a, 6b mesurée par la machine de mesure et/ou de contrôle 4 peut être, par exemple et de manière non limitative, la lecture d'un code inscrit sur ladite pièce 6a, 6b et associé à la machine d'usinage 2a, 2b, ou la lecture d'un code barre apposé sur ladite pièce 6a, 6b, ou encore l'identification de ladite pièce 6a, 6b par radio fréquence.

Ainsi, suivant l'exemple illustré de l'invention aux figures 1 à 3, au cours de la deuxième étape 200, la machine de mesure et/ou de contrôle 4 mesure la première pièce 6a et la deuxième pièce 6b usinées par lesdites machines d'usinage 2a, 2b lors de la première étape et associe à la fois la première machine d'usinage 2a et la deuxième machine d'usinage 2b respectivement à la première pièce 6a et la deuxième pièce 6b. Par ailleurs, au cours de cette deuxième étape 200 du procédé, la machine de mesure et/ou de contrôle 4 identifie l'au moins une pièce 6a, 6b usinée lors de la première étape 100, ici la première pièce 6a et la deuxième pièce 6b.

On comprend notamment que lors de cette deuxième étape 200, la machine de mesure et/ou de contrôle 4 est apte à associer l'au moins une pièce 6a, 6b usinée qu'elle mesure à l'une des machines d'usinage 2a, 2b, notamment grâce au programme d'ordinateur 8 qu'elle contient.

Ainsi, au cours de la deuxième étape 200, la machine de mesure et/ou de contrôle 4 compare la valeur mesurée d'au moins une des pièces 6a, 6b avec la valeur nominale de ladite pièce 6a, 6b considérée. Dans l'exemple illustré, l'au moins une valeur mesurée est un diamètre mesuré D de la première pièce 6a, ici le premier piston, comparée à la valeur nominale, ici un diamètre de référence de la première pièce 6a. Un raisonnement identique s'applique notamment à la deuxième pièce 6b formant ici le deuxième piston, et plus généralement à toutes les dimensions d'intérêts de la pièce mesurée.

A la suite de la comparaison entre la valeur mesurée et la valeur nominale, le procédé selon l'invention met en œuvre la troisième étape 300 lorsque la différence entre l'au moins une valeur mesurée et l'au moins une valeur nominale dépasse un seuil déterminé. On comprend notamment que le seuil correspond à une valeur où on comprend que les dimensions de la pièce 6a, 6b s'approchent des limites maximale ou minimale de la tolérance de fabrication. Selon un exemple d'application, la tolérance de fabrication est ici de 1mm et la valeur seuil est de 0,2mm. Ainsi, lorsque la différence entre la valeur mesurée de la première pièce 6a, ici le diamètre mesuré du premier piston et la valeur nominale, ici le diamètre de référence du premier piston, dépasse la valeur seuil de 0,2mm, la chaine de production 1 met en œuvre la troisième étape 300 du procédé. On comprend par ailleurs qu'un raisonnement identique s'applique à la deuxième pièce 6b usinée.

Lors de la troisième étape 300, la machine de mesure et/ou de contrôle 4 détermine au moins un correctif d'usinage à partir de l'au moins une valeur mesurée d'au moins une de la première pièce 6a et/ou de la deuxième pièce 6b lors de la deuxième étape 200. On comprend notamment que le correctif d'usinage permet de réduire la différence entre la valeur mesurée des prochaines pièces usinées par la machine d'usinage 2a, 2b, dont la pièce 6a, 6b mesurée présente la différence entre sa valeur mesurée et sa valeur nominale qui dépasse le seuil déterminé évoqué précédemment, et la valeur nominale desdites prochaines pièces. Selon l'exemple de l'invention et dans le cas où la comparaison des valeurs mesurées de la première pièce 6a et de la deuxième pièce 6b avec les valeurs nominales respectivement de la première pièce 6a et de la deuxième pièce 6b, tel que décrit précédemment, dépasse le seuil déterminé, la machine de mesure et/ou de contrôle 4 détermine l'au moins un correctif d'usinage pour chacune de la première machine d'usinage 2a et de la deuxième machine d'usinage 2b afin que les prochaines pièces usinées par ces machines d'usinage 2a, 2b présentent des valeurs mesurées plus proches des valeurs nominales, c'est-à-dire éloignées des limites de la tolérance de fabrication.

Une fois l'au moins un correctif établi par la machine de mesure et/ou de contrôle 4, et notamment par le programme d'ordinateur 8 qu'elle contient, ladite machine de mesure et/ou de contrôle 4 transmet ledit correctif exclusivement à l'au moins une machine d'usinage 2a, 2b mise en œuvre lors de la première étape 100. Plus particulièrement, et selon l'exemple de l'invention, la machine de mesure et/ou de contrôle 4 envoie le correctif consécutif à la mesure de la première pièce 6a à la première machine d'usinage 2a et le correctif consécutif à la mesure de la deuxième pièce 6b à la deuxième machine d'usinage 2b. Selon un exemple non limitatif de l'invention, l'envoie du correctif peut s'opérer par un réseau informatique lié au programme d'ordinateur 8, ou encore par une communication électronique entre la machine de mesure et/ou de contrôle 4 et les machines d'usinage 2a, 2b.

Par ailleurs, le procédé comprend une étape alternative 350 à la troisième étape, appelé étape d'arrêt 350, mise en œuvre à la suite de la comparaison entre l'au moins une valeur mesurée avec l'au moins une valeur nominale par la machine de mesure et/ou de contrôle 4. Plus particulièrement, lors de cette étape alternative 350, si la valeur mesurée est en dehors de la tolérance de fabrication, la machine de mesure et/ou de contrôle 4 arrête l'au moins une machine d'usinage 2a, 2b qui met en œuvre la première étape 100 du procédé et informe un conducteur de la chaine de production qu'une maintenance est nécessaire. En d'autres termes, lorsque l'une de la première pièce 6a et/ou de la deuxième pièce 6b présente au moins une dimension qui est hors tolérance de fabrication, le programme d'ordinateur 8 de la machine de mesure et/ou de contrôle 4 commande l'arrêt de la première machine d'usinage 2a et/ou de la deuxième machine d'usinage 2b concernée, le recalibrage de cette dernière nécessitant par exemple l'intervention du conducteur de la chaine de production 1.

A la suite de la troisième étape 300, la chaine de production 1 met en œuvre la quatrième étape 400 du procédé au cours de laquelle la machine de mesure et/ou de contrôle 4 vérifie la bonne réception du correctif par l'au moins une machine d'usinage 2a, 2b mise en œuvre lors de la première étape 100. Par ailleurs, la quatrième étape 400 peut comprendre une sous-étape 410 d'intégration ou de bonne prise en compte du correctif reçu par la machine d'usinage 2a, 2b lors de la troisième étape 300.

On comprend alors que, lors de la quatrième étape 400, d'une part la machine d'usinage 2a, 2b recevant les correctifs appliquent ces derniers aux prochaines pièces usinées, et d'autre part, que la machine de mesure et/ou de contrôle 4 s'assure que le correctif a été envoyé à la machine d'usinage 2a, 2b dont les prochaines pièces usinées nécessitaient un correctif, tels que déterminés lors de la troisième étape 300, et uniquement à cette machine d'usinage 2a, 2b.

Selon l'exemple de l'invention, la machine de mesure et/ou de contrôle 4 vérifie la bonne réception du correctif par la première machine d'usinage 2a et du correctif par la deuxième machine d'usinage 2b. Les moyens mis en œuvre par le programme d'ordinateur 8 pour la vérification de la bonne réception du correctif par la bonne machine d'usinage 2a, 2b peuvent par exemple consister en l'émission par ladite machine d'usinage 2a, 2b d'un ou plusieurs premiers signaux envoyés à la machine de mesure et/ou de contrôle 4. La machine de mesure et/ou de contrôle 4 vérifie également la prise en compte du correctif par la machine d'usinage 2a, 2b, c'est-à-dire l'implémentation du correctif dans le programme de la machine d'usinage 2a, 2b. Cette vérification de la prise en compte du correctif peut consister par exemple en l'émission d'un ou plusieurs seconds signaux envoyés à la machine de mesure et/ou de contrôle 4.

Selon un autre exemple de l'invention, les moyens mis en œuvre par le programme d'ordinateur 8 pour la vérification de la prise en compte du correctif par la machine d'usinage 2a, 2b peuvent consister en la mesure d'une pièce usinée par la machine d'usinage 2a, 2b destinataire du correctif, postérieurement à la réception desdits correctifs. En d'autres termes, à l'issu de l'envoi du correctif et une fois la machine d'usinage 2a, 2b destinataire du correctif ayant mise en œuvre à nouveau la première étape 100 du procédé, la machine de mesure et/ou de contrôle 4 applique à nouveau la deuxième étape afin de vérifier que ledit correctif a été pris en compte par la machine d'usinage 2a, 2b destinataire du correctif. A la suite de la quatrième étape, la chaine de production revient à la première étape du procédé.

On comprend que le procédé de contrôle de l'usinage tel qu'il vient d'être décrit permet de contrôler le dimensionnement d'au moins une pièce usinée sur une chaine de production comprenant au moins deux machines d'usinage et permet notamment d'anticiper une dérive dimensionnelle de ladite pièce usinée en appliquant un correctif, et en vérifiant que la machine d'usinage concernée a bien reçu le correctif. On permet par ailleurs de déterminer des correctifs à appliquer à une des machines d'usinage de manière automatique au moyen d'un programme d'ordinateur implanté dans la machine de mesure et/ou de contrôle, tout en assurant l'envoi desdits correctifs à la bonne machine d'usinage parmi l'ensemble des machines d'usinage de la chaine de production.

L'invention telle qu'elle vient d'être décrite ne saurait toutefois se limiter aux moyens et configurations exclusivement décrits et illustrés, et s'applique également à tous moyens ou configurations, équivalents et à toute combinaison de tels moyens ou configurations. conformément aux caractéristiques telles que définies dans les revendications.

## Revendications

1. Procédé de contrôle de l'usinage d'au moins une première pièce (6a) usinée par une première machine d'usinage (2a), le procédé mettant en œuvre au moins une machine de mesure et/ou de contrôle (4) de ladite d'au moins première pièce (6a),
le procédé comprenant au moins :
- une première étape (100) au cours de laquelle la machine d'usinage (2a) usine l'une des pièces (6a),
- une deuxième étape (200) au cours de laquelle la machine de mesure et/ou de contrôle (4) mesure la pièce (6a) usinée lors de la première étape (100) et associe l'une et/ou l'autre des machines d'usinage (2a, 2b) à la pièce (6a) ainsi mesurée et,
- une troisième étape (300) au cours de laquelle la machine de mesure et/ou de contrôle (4) détermine au moins un correctif d'usinage à partir des mesures de la pièce (6a) et transmet ce correctif à la machine d'usinage (2a, 2b) ayant usinée la pièce (6a) mesurée à la deuxième étape (200), et
- une quatrième étape (400) au cours de laquelle la machine de mesure et/ou de contrôle (4) vérifie la bonne réception du correctif par la machine d'usinage (2a, 2b) ayant usinée la pièce (6a) lors de la première étape (100)
**caractérisé par**
le contrôle de l'usinage d'une deuxième pièce (6b) usinée par une deuxième machine d'usinage (2b) et la vérification de la quatrième étape (400) comprenant la vérification de la bonne réception du correctif par la première machine d'usinage (2a) et/ou du correctif par la deuxième machine d'usinage (2b) ;
la quatrième étape (400) comprenant que la machine d'usinage acquitte l'intégration du correctif reçu lors de la troisième étape (300) par l'envoi en retour d'un signal électronique à la machine de mesure et/ou de contrôle (4), et la vérification de la machine de mesure et/ou de contrôle (4) prenant en compte le correctif par la machine d'usinage comprenant la vérification de l'implémentation du correctif dans le programme de la machine d'usinage (2a, 2b).

2. Procédé de contrôle selon la revendication précédente, au cours duquel, lors de la deuxième étape (200), la machine de mesure et/ou de contrôle (4) compare au moins une valeur mesurée avec au moins une valeur nominale de la pièce (6a, 6b), puis met en œuvre la troisième étape (300) lorsque la différence entre l'au moins une valeur mesurée et l'au moins une valeur nominale passe au-dessus d'un seuil déterminé.

3. Procédé de contrôle selon la revendication 1, au cours duquel, lors de la deuxième étape (200), la machine de mesure et/ou de contrôle (4) compare au moins une valeur mesurée avec au moins une valeur nominale de la pièce (6a, 6b), la machine de mesure et/ou de contrôle (4) arrêtant l'au moins une machine d'usinage (2a, 2b) ayant usinée la pièce (6a, 6b) mesurée à la deuxième étape (200) lorsque l'au moins une valeur mesurée lors de la deuxième étape (200) est en dehors d'une tolérance de fabrication de la valeur nominale correspondante.

4. Procédé de contrôle selon l'une quelconque des revendications précédentes, dans lequel la première pièce (6a) et la deuxième pièce (6b) usinées respectivement par la première machine d'usinage (2a) et la deuxième machine d'usinage (2b) présentent des dimensions de valeur nominale identique.

5. Procédé de contrôle selon l'une quelconque des revendications précédentes, où, au cours de la deuxième étape (200), la machine de mesure et/ou de contrôle (4) identifie également l'au moins une pièce (6a, 6b) usinée lors de la première étape (100) par la machine d'usinage (6a, 6b).

6. Procédé de contrôle selon l'une quelconque des revendications précédentes, dans lequel la quatrième étape (400) comprend une sous-étape (410) de vérification de la bonne prise en charge du correctif reçu par la machine d'usinage (2a, 2b) lors de la troisième étape (300).

7. Procédé de contrôle selon l'une quelconque des revendications précédentes, au cours duquel, lors de la première étape (100), la première machine d'usinage (2a) usine la première pièce (6a) et la deuxième machine d'usinage (2b) usine la deuxième pièce (6b), lors de la deuxième étape (200), la machine de mesure et/ou de contrôle (4) mesure la première pièce (6a) et la deuxième pièce (6b) et associe l'une ou l'autre des machines d'usinage (2a, 2b) aux pièces (6a, 6b) mesurées, et lors de la troisième étape (300), la machine de mesure et/ou de contrôle (4) détermine des correctifs d'usinage à partir des mesures de la première pièce (6a) et de la deuxième pièce (6b) et transmet ces correctifs respectivement à la première machine d'usinage (2a) et la deuxième machine d'usinage (2b) mise en œuvre lors de la première étape (100).

8. Chaine de production (1) comprenant une première machine d'usinage (2a) et une deuxième machine d'usinage (2b), la première machine d'usinage (2a) étant destinée à usiner une première pièce (6a) et la deuxième machine d'usinage (2b) étant destinée à usiner une deuxième pièce (6b), la chaine de production (1) comprenant une machine de mesure et/ou de contrôle (4), la chaine de production (1) mettant en œuvre le procédé de contrôle de l'usinage selon l'une quelconque des revendications précédentes.

9. Chaine de production (1) selon la revendication précédente, dans laquelle la première pièce (6a) et la deuxième pièce (6b) présentent des dimensions de valeur nominale identique.

10. Programme d'ordinateur (8) comprenant des instructions de codes de programme pour l'exécution de la deuxième étape (200) du procédé jusqu'à la quatrième étape (400) du procédé selon l'une quelconque des revendications 1 à 7 lorsque le programme est exécuté sur la machine de mesure et/ou de contrôle (4), selon lequel, sur la base d'informations recueillies sur la chaine de production (1) selon la revendication 8 ou 9, le programme d'ordinateur (8) est configuré pour associer l'une et/ou l'autre des machines d'usinage (2a, 2b) à la pièce (6a, 6b) mesurée à la deuxième étape (200), le programme d'ordinateur (8) étant configuré pour vérifier la bonne réception du ou des correctifs envoyés à ladite machine d'usinage (2a, 2b).

## Patentansprüche

1. Verfahren zum Kontrollieren der Bearbeitung mindestens eines ersten Werkstücks (6a), das von einer ersten Bearbeitungsmaschine (2a) bearbeitet wird, wobei das Verfahren mindestens eine Mess- oder Kontrollmaschine (4) zum Messen und/oder Kontrollieren des mindestens einen ersten Werkstücks (6a) einsetzt,
wobei das Verfahren mindestens umfasst:
- einen ersten Schritt (100), bei dem die Bearbeitungsmaschine (2a) eines der Werkstücke (6a) bearbeitet,
- einen zweiten Schritt (200), bei dem die Messund/oder Kontrollmaschine (4) das im ersten Schritt (100) bearbeitete Werkstück (6a) vermisst und dem so vermessenen Werkstück (6a) die eine und/oder die andere der Bearbeitungsmaschinen (2a, 2b) zuordnet, und
- einen dritten Schritt (300), bei dem die Messund/oder Kontrollmaschine (4) ausgehend von den Messungen des Werkstücks (6a) mindestens eine Bearbeitungskorrektur ermittelt und diese Korrektur an die Bearbeitungsmaschine (2a, 2b) überträgt, die das im zweiten Schritt (200) vermessene Werkstück (6a) bearbeitet hat, und
- einen vierten Schritt (400), bei dem die Messund/oder Kontrollmaschine (4) den korrekten Empfang der Korrektur durch die Bearbeitungsmaschine (2a, 2b), die das Werkstück (6a) im ersten Schritt (100) bearbeitet hat, überprüft,
**gekennzeichnet durch**
das Kontrollieren der Bearbeitung eines zweiten Werkstücks (6b), das von einer zweiten Bearbeitungsmaschine (2b) bearbeitet wird, und das Überprüfen des vierten Schritts (400), umfassend das Überprüfen des korrekten Empfangs der Korrektur durch die erste Bearbeitungsmaschine (2a) und/oder der Korrektur durch die zweite Bearbeitungsmaschine (2b);
wobei der vierte Schritt (400) umfasst, dass die Bearbeitungsmaschine die Integration der im dritten Schritt (300) empfangenen Korrektur durch das Zurücksenden eines elektronischen Signals an die Messund/oder Kontrollmaschine (4) quittiert, und wobei das Überprüfen der Mess- und/oder Prüfmaschine (4), das die Korrektur durch die Bearbeitungsmaschine berücksichtigt, das Überprüfen der Implementierung der Korrektur in das Programm der Bearbeitungsmaschine (2a, 2b) umfasst.

2. Verfahren zum Kontrollieren nach dem vorhergehenden Anspruch, bei dem die Mess- und/oder Kontrollmaschine (4) in dem zweiten Schritt (200) mindestens einen gemessenen Wert mit mindestens einem Nennwert des Werkstücks (6a, 6b) vergleicht, dann den dritten Schritt (300) durchführt, wenn die Differenz zwischen dem mindestens einen gemessenen Wert und dem mindestens einen Nennwert einen bestimmten Schwellenwert überschreitet.

3. Verfahren zum Kontrollieren nach Anspruch 1, bei dem die Mess- und/oder Kontrollmaschine (4) in dem zweiten Schritt (200) mindestens einen gemessenen Wert mit mindestens einem Nennwert des Werkstücks (6a, 6b) vergleicht, wobei die Mess- und/oder Kontrollmaschine (4) die mindestens eine Bearbeitungsmaschine (2a, 2b), die das im zweiten Schritt (200) vermessene Werkstück bearbeitet hat (6a, 6b), stoppt, wenn der mindestens eine in dem zweiten Schritt (200) gemessene Wert außerhalb einer Fertigungstoleranz des entsprechenden Nennwerts liegt.

4. Verfahren zum Kontrollieren nach einem der vorhergehenden Ansprüche, wobei das erste Werkstück (6a) und das zweite Werkstück (6b), die von der ersten Bearbeitungsmaschine (2a) bzw. der zweiten Bearbeitungsmaschine (2b) bearbeitet werden, Abmessungen mit identischem Nennwert aufweisen.

5. Verfahren zum Kontrollieren nach einem der vorhergehenden Ansprüche, bei dem die Mess- und/oder Kontrollmaschine (4) beim zweiten Schritt (200) auch das mindestens eine Werkstück (6a, 6b) identifiziert, das im ersten Schritt (100) von der Bearbeitungsmaschine (6a, 6b) bearbeitet wurde.

6. Verfahren zum Kontrollieren nach einem der vorhergehenden Ansprüche, wobei der vierte Schritt (400) einen Teilschritt (410) des Überprüfens der korrekten Übernahme der von der Bearbeitungsmaschine (2a, 2b) im dritten Schritt (300) empfangenen Korrektur umfasst.

7. Verfahren zum Kontrollieren nach einem der vorhergehenden Ansprüche, bei dem im ersten Schritt (100) die erste Bearbeitungsmaschine (2a) das erste Werkstück (6a) bearbeitet und die zweite Bearbeitungsmaschine (2b) das zweite Werkstück (6b) bearbeitet, im zweiten Schritt (200) die Mess- und/oder Kontrollmaschine (4) das erste Werkstück (6a) und das zweite Werkstück (6b) vermisst und die eine oder die andere der Bearbeitungsmaschinen (2a, 2b) den vermessenen Werkstücken (6a, 6b) zuordnet und im dritten Schritt (300) die Mess- und/oder Kontrollmaschine (4) ausgehend von den Messungen des ersten Werkstücks (6a) und des zweiten Werkstücks (6b) Bearbeitungskorrekturen ermittelt und diese Korrekturen an die erste Bearbeitungsmaschine (2a) bzw. die zweite Bearbeitungsmaschine (2b), die im ersten Schritt (100) eingesetzt wurde, überträgt.

8. Fertigungsstraße (1), die eine erste Bearbeitungsmaschine (2a) und eine zweite Bearbeitungsmaschine (2b) umfasst, wobei die erste Bearbeitungsmaschine (2a) dazu bestimmt ist, ein erstes Werkstück (6a) zu bearbeiten, und wobei die zweite Bearbeitungsmaschine (2b) dazu bestimmt ist, ein zweites Werkstück (6b) zu bearbeiten, wobei die Fertigungsstraße (1) eine Mess- und/oder Kontrollmaschine (4) umfasst, wobei die Fertigungsstraße (1) das Verfahren zum Kontrollieren der Bearbeitung nach einem der vorhergehenden Ansprüche einsetzt.

9. Fertigungsstraße (1) nach dem vorhergehenden Anspruch, wobei das erste Werkstück (6a) und das zweite Werkstück (6b) Abmessungen mit identischem Nennwert aufweisen.

10. Computerprogramm (8), umfassend Programmcodeanweisungen zur Ausführung des zweiten Schritts (200) des Verfahrens bis zum vierten Schritt (400) des Verfahrens nach einem der Ansprüche 1 bis 7, wenn das Programm auf der Mess- und/oder Kontrollmaschine (4) ausgeführt wird, gemäß dem das Computerprogramm (8) dazu konfiguriert ist, auf der Grundlage von in der Fertigungsstraße (1) nach Anspruch 8 oder 9 gesammelten Informationen
die eine und/oder die andere der Bearbeitungsmaschinen (2a, 2b) dem im zweiten Schritt (200) vermessenen Werkstück (6a, 6b) zuzuordnen, wobei das Computerprogramm (8) dazu konfiguriert ist,
den korrekten Empfang der an die Bearbeitungsmaschine (2a, 2b) gesendeten Korrektur(en) zu überprüfen.

## Claims

1. Method for inspecting the machining of at least a first part (6a) machined by a first machining machine (2a), the method implementing at least one machine (4) for measuring and/or inspecting said at least first part (6a),
the method comprising at least:
- a first step (100) in the course of which the machining machine (2a) machines one of the parts (6a),
- a second step (200) in the course of which the measuring and/or inspecting machine (4) measures the part (6a) machined during the first step (100) and associates one and/or the other of the machining machines (2a, 2b) with the part (6a) thus measured, and
- a third step (300) in the course of which the measuring and/or inspecting machine (4) determines at least one machining correction based on the measurements of the part (6a) and transmits this correction to the machining machine (2a, 2b) that machined the part (6a) measured in the second step (200), and
- a fourth step (400) in the course of which the measuring and/or inspecting machine (4) checks that the correction has been properly received by the machining machine (2a, 2b) that machined the part (6a) during the first step (100),
**characterized by**
inspecting the machining of a second part (6b) machined by a second machining machine (2b) and the checking in the fourth step (400) comprising checking that the correction has been properly received by the first machining machine (2a) and/or the correction has been properly received by the second machining machine (2b);
the fourth step (400) comprising the machining machine acknowledging the integration of the correction received during the third step (300) by sending a reply consisting of an electronic signal to the measuring and/or inspecting machine (4), and the checking by the measuring and/or inspecting machine (4) taking into account the correction made by the machining machine comprising checking that the correction has been implemented in the program of the machining machine (2a, 2b).

2. Inspecting method according to the preceding claim, in the course of which, during the second step (200), the measuring and/or inspecting machine (4) compares at least one measured value with at least one nominal value of the part (6a, 6b), then implements the third step (300) when the difference between the at least one measured value and the at least one nominal value exceeds a determined threshold.

3. Inspecting method according to Claim 1, in the course of which, during the second step (200), the measuring and/or inspecting machine (4) compares at least one measured value with at least one nominal value of the part (6a, 6b), with the measuring and/or inspecting machine (4) shutting down the at least one machining machine (2a, 2b) that machined the part (6a, 6b) measured in the second step (200) when the at least one value measured during the second step (200) is outside a manufacturing tolerance of the corresponding nominal value.

4. Inspecting method according to any one of the preceding claims, wherein the first part (6a) and the second part (6b) machined by the first machining machine (2a) and the second machining machine (2b), respectively, have dimensions with an identical nominal value.

5. Inspecting method according to any one of the preceding claims, wherein, in the course of the second step (200), the measuring and/or inspecting machine (4) also identifies the at least one part (6a, 6b) machined during the first step (100) by the machining machine (6a, 6b).

6. Inspecting method according to any one of the preceding claims, wherein the fourth step (400) comprises a sub-step (410) of checking that the correction received by the machining machine (2a, 2b) during the third step (300) has been properly adopted.

7. Inspecting method according to any one of the preceding claims, in the course of which, during the first step (100), the first machining machine (2a) machines the first part (6a) and the second machining machine (2b) machines the second part (6b), during the second step (200), the measuring and/or inspecting machine (4) measures the first part (6a) and the second part (6b) and associates one or the other of the machining machines (2a, 2b) with the measured parts (6a, 6b), and, during the third step (300), the measuring and/or inspecting machine (4) determines machining corrections based on the measurements of the first part (6a) and of the second part (6b) and transmits these corrections to the first machining machine (2a) and to the second machining machine (2b), respectively, used during the first step (100).

8. Production line (1) comprising a first machining machine (2a) and a second machining machine (2b), the first machining machine (2a) being intended to machine a first part (6a) and the second machining machine (2b) being intended to machine a second part (6b), the production line (1) comprising a measuring and/or inspecting machine (4), the production line (1) implementing the method for inspecting the machining according to any one of the preceding claims.

9. Production line (1) according to the preceding claim, wherein the first part (6a) and the second part (6b) have dimensions with an identical nominal value.

10. Computer program (8) comprising program code instructions for executing the second step (200) of the method up to the fourth step (400) of the method according to any one of Claims 1 to 7 when the program is executed on the measuring and/or inspecting machine (4), wherein, on the basis of information gathered on the production line (1) according to Claim 8 or 9, the computer program (8) is configured to
associate one and/or the other of the machining machines (2a, 2b) with the part (6a, 6b) measured in the second step (200), the computer program (8) being configured to check that the correction(s) sent to said machining machine (2a, 2b) have been properly received.
